Europäisches Patentamt

(19) European Patent Office

Office européen des brevets

(11) Publication number: **0 003 575**
**B1**

(12) **EUROPEAN PATENT SPECIFICATION**

(45) Date of publication of patent specification: **05.05.82**

(51) Int. Cl.³: **G 02 B 27/10, G 02 B 5/14**

(21) Application number: **79100314.8**

(22) Date of filing: **02.02.79**

(54) Method and device for mixing or demixing optical beams for transmission on optical fibres.

(30) Priority: **09.02.78 IT 6725478**
**10.04.78 IT 6778178**

(43) Date of publication of application:
**22.08.79 Bulletin 79/17**

(45) Publication of the grant of the patent:
**05.05.82 Bulletin 82/18**

(84) Designated Contracting States:
**BE DE FR GB NL SE**

(56) References cited:
**US - A - 3 870 396**
**US - A - 3 870 398**
**US - A - 3 923 377**

(73) Proprietor: **CSELT Centro Studi e Laboratori**
**Telecomunicazioni S.p.A.**
**Via Guglielmo Reiss Romoli, 274**
**I-10148 Turin (IT)**

(72) Inventor: **Di Vita, Pietro**
**C.so Francia, 351**
**Turin (IT)**

(74) Representative: **Riederer Freiherr von Paar zu**
**Schönau, Anton**
**Müllerstrasse 31**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method and device for mixing or demixing optical beams for transmission on optical fibres

The present invention relates to signal transmission on multimode optical fibres and more particularly it concerns a method of collecting into a single light beam, light beams coming from different sources having different wavelengths, and of splitting a light beam, formed of several light beams with different wavelengths, into the single composing light beams. The invention concerns also the devices for realizing such a method.

It is known that in transmission systems, the signal multifrequency encoding allows to increase the amount of information transmitted in the time unit, so avoiding a further increment in transmission speed on the line. This kind of encoding is particularly interesting where applied to communication systems on optical fibres, whenever light beams are utilized having wavelengths in the bands $\lambda_1=0,86\div0,9$ $\mu$m and $\lambda_2=1,06\div1,3$ $\mu$m, where the multimode fibre attenuation presents minimum values.

The technical problem to be coped with while adopting this system, consists in collecting into a single beam optical signals with different wavelengths coming from different light sources, in order to insert them into the optical fibre forming the transmissive means, whilst in the reception phase, the opposite problem is encountered of extracting from the arriving light beam the signals with different wavelengths.

The use of a prism or other conventional dispersion devices does not solve this problem in a satisfactory way; in fact, due to the slightly different wavelengths a very limited dispersion angle may be obtained.

This entails serious difficulties in the positioning of the light sources or of photodetectors because, unless further devices are used (which make the device more complicated) drastic coupling losses are caused.

On the contrary, the use of conventional beam splitters systematically causes the loss of at least half the optical power.

These inconveniences are overcome by the invention the object of which is a method of mixing or demixing light beams having different wavelengths, by using a body subdivided into two parts made of transparent material having different optical dispersions, by effecting the mixing operation by sending at least two light beams with different wavelengths into the said body so that their axes lie in a plane and the separation plane of the said two parts bisects the angle between the said two light beams, and by choosing the said angle between the light beams and the difference in the optical dispersions of the said two parts in such a way that for one beam no discontinuity of the refractive index appears and it passes the separation plane without deviation whereas the other beam meets an index discontinuity which causes total reflection of the said other beam at the separation plane; and by effecting the demixing operation by sending a light beam comprising light with at least two different wavelengths into the said body and by choosing the angle of incidence of the said beam and the difference in the optical dispersions of the said two parts of the body in such a way that for the light with one wavelength contained in the incident beam no discontinuity of the refractive index appears and it passes the said separation plane without deviation whereas the remaining light forming the said beam meets an index discontinuity which causes total reflection of that light at the separation plane.

This method allows to collect into a single light beam whatever number of optical signals with different wavelengths, coming from an equal number of light sources and, inversely, it allows to extract from the arriving light beam all the component optical signals with different wavelengths, also presenting a good dispersion angle for light beams with wavelengths slightly different and allowing to maintain the losses at negligible values for practical purposes.

Optical mixers and demixers able to realize said procedure, are further objects of the present invention.

The present invention will become clearer from the following description of three preferred embodiments thereof, given by way of example and not in a limiting sense, taken in connection with the annexed drawings in which:

— Fig. 1 is a schematic representation of the principle on which the invention is based;
— Fig. 2 represents a complete cross-sectional view of a first optical mixer-demixer able to operate on two optical signals with different wavelength;
— Fig. 3 is a sectional view of a second optical mixer-demixer able to operate on six optical signals with different wavelength;
— Fig. 4 is a Cartesian diagram showing the refractive indexes as a function of the wavelength of the transparent materials composing the second optical mixer-demixer;
— Fig. 5 is a sectional view of a third optical mixer-demixer able to operate on nine optical signals with different wavelengths;
— Fig. 6 is a Cartesian diagram showing the refractive indices as a function of the wavelength of the transparent material composing the third optical mixer-demixer.

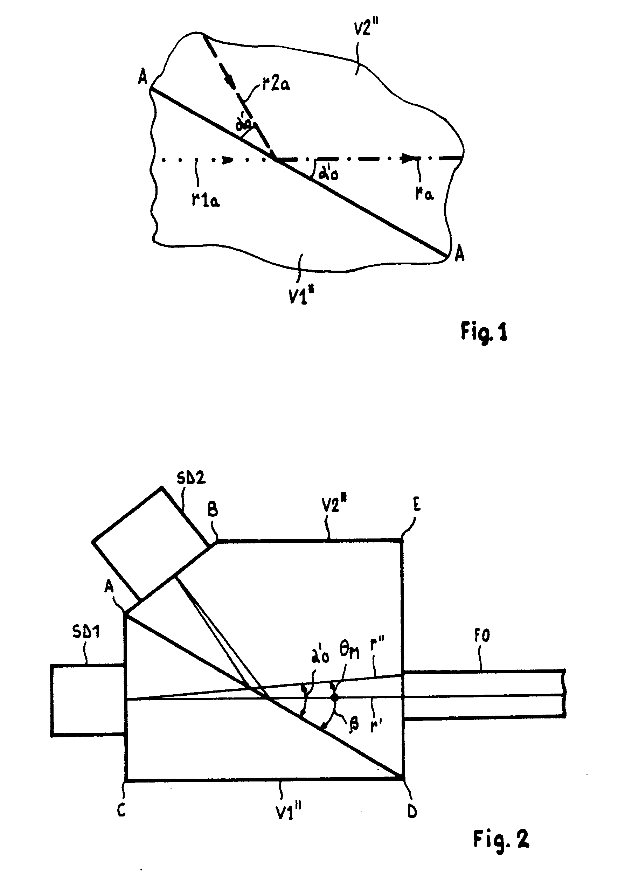

It will now be explained with reference to Fig. 1, the general procedure, based on the geometrical optics laws, which allows to collect two light beams having different wavelengths, into a single light beam.

In said drawing reference AA denotes the trace of a plane surface separating two transparent materials V1'' and V2'', characterized by

**0 003 575**

suitable refractive indices, as will be described hereinafter.

References r1a and r2a denote two incident rays coming from two monochromatic light sources with wavelength $\lambda 1$ and $\lambda 2$ respectively, and reference ra denotes a light ray obtained by superimposing r1a and r2a.

Denoting by $n1''(\lambda)$ and $n2''(\lambda)$ the refractive index at a generic wavelength, of materials V1'' and V2'' respectively, the conditions necessary to verify the situation represented in Fig. 1 are the following:

$$n1''(\lambda 1) = n2''(\lambda 1) \qquad (1)$$

$$n1''(\lambda 2) < n2''(\lambda 2) \qquad (2)$$

They determine the values of the refractive indices of V1'' and V2''; more particularly, in (1) the fact is emphasized that the refractive indices of the two materials must be equal in correspondence with the wavelength $\lambda 1$ and in (2) it is emphasized that the refractive index of V1'' must be less than the one of V2'', at wavelength $\lambda 2$.

As a consequence, r1a crosses the separation surface AA without undergoing deviations, as there is no refractive index discontinuity; viceversa, r2a meets a discontinuity in correspondence with the surface AA, by which it is reflected.

If the angle formed by r2a and AA, denoted in the Fig. 1 by $\alpha_0^1$, is duly chosen and the point at which r2a meets AA is coincident with the point at which also r1a meets AA, the two incident rays are superimposed and form a single outgoing ray ra.

The condition, according to the known low of the geometric optics, which must be verified to allow r2a to undergo a total reflection is the following

$$\alpha_0^1 \leq \text{arc cos} \frac{n1''(\lambda 2)}{n2''(\lambda 2)} \qquad (3)$$

where the angle $\alpha_0^1$, in the case in which the relation (3) is reduced to an equation, represents the complementary of the limit angle.

These considerations may be equally applied and are valid in the reciprocal situation in which ra is the ray incident on the separation surface AA and is formed by two rays having different wavelengths, and r1a and r2a are the outgoing rays, the one transmitted unchanged into the transparent material V1'' and the other one reflected by the separation surface AA.

The application of the described procedure to a fibre optics multifrequency transmission system will be next described in connection with Fig. 2 which shows an optical mixer-demixer able to operate on two optical signals, having a simple structure and minimum encumbrance.

References SD1 and SD2 denote two light sources, realized by means either of photoemitting diodes (LED) or of laser devices in the case in which an apparatus emitting optical power is concerned, or respectively two photodetecting devices in case of a receiving apparatus.

Reference FO denotes an optical fibre, forming the transmitting medium between the emitting and receiving apparatuses.

The triangle having vertices A, C, D represents the section of a prism of transparent material V1''; analogously the polygon having vertices A, B, E, D represents the section of a prism of transparent material V2''. The characteristics of materials V1'' and V2'' are equal to those previously described and defined in relations (1) and (2).

The introduction of the optical fibre FO imposes a further condition for realizing the optical mixer-demixer, as a function of the utilized multimode fibre.

In fact, denoting by r' the axial ray and r'' the most external one still able to propagate along the fibre, angle $\theta_M$ comprised between r' and r'' may be defined as "maximum acceptance angle" (equal to the arc sine of the numerical aperture). This angle is a characteristic magnitude of each kind of fibre; it is advantageous to estimate its influence on the design criteria of the optical mixer-demixer in order to define a field of values for an angle $\beta$, comprised between r' and the trace AD of the separation surface between V1'' and V2''.

In this case, in which there is a plurality of rays, condition (3) is to be imposed for the ray next to the critical conditions of total reflection; this is the ray r'' of Fig. 2 which has an angle such that:

$$\beta = \alpha_0^1 - \theta_M \qquad (4)$$

By replacing the value $\alpha_0^1$ defined in the relation (3) we have:

$$\beta \leq \text{arc cos} \frac{n1''(\lambda 2)}{n2''(\lambda 1)} - \theta_M \qquad (5)$$

So, on the basis of relations (1), (2) and (5), the values of n1'', n2'' and $\beta$ may be dimensioned; said values completely characterize this first device, object of the invention.

Of course, for the principle of reversibility of light path in geometric optics, aforementioned considerations are valid both for the light beams going out of SD1 and SD2 (seen as light sources) and entering SD1 and SD2 (seen as photodetectors).

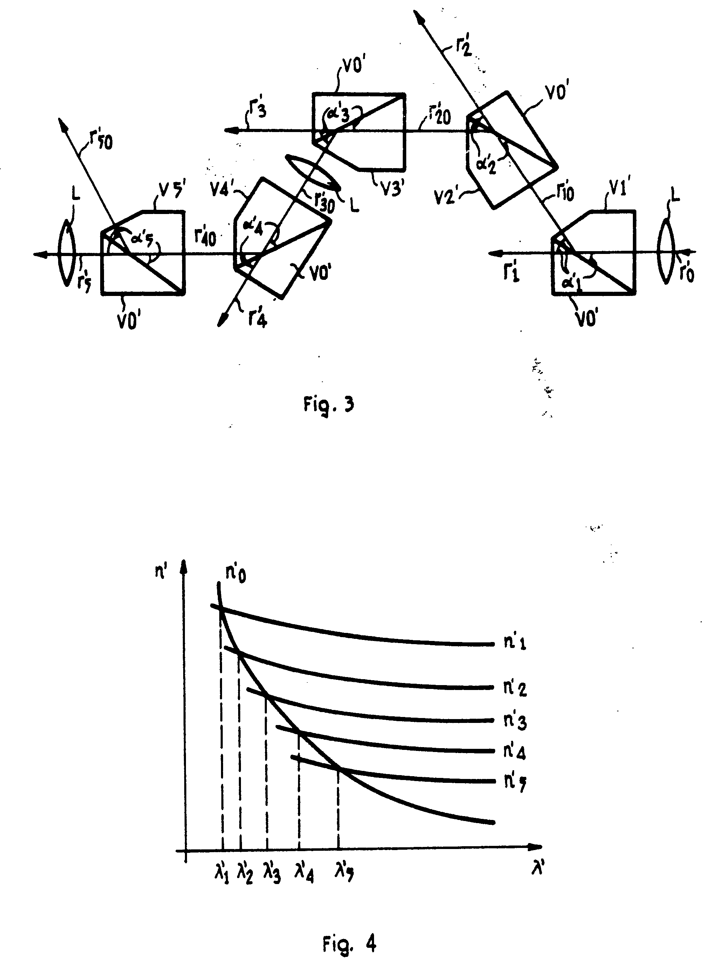

A second example of embodiment of the invention able to mix or demix six optical signals directed to or respectively coming from an optical fibre is represented in cross-sectional view in Fig. 3.

In said figure, VO' generically denotes five prismatic bodies of transparent material having the same refractive index characteristics; references V1', V2',..., V5' denote five prismatic bodies of transparent material, whose refractive indices, for a correct operation of the device, must satisfy some stated conditions, as it will be clarified hereinafter.

References $r'_0$, $r'_1$ ..., $r'_5$ and $r'_{10}$, $r'_{20}$ ..., $r'_{50}$ denote the axial rays of light beams which are partly reflected and partly transmitted unchanged inside the mixer-demixer; references $\alpha'_1$, $\alpha'_2$ ... $\alpha'_5$ denote the angles comprised between the axial ray of the light beams and the separation surfaces between the various transparent materials; each $\alpha'$ is referred to three angles equal to one another; reference L denotes lenses or systems of lenses placed at the input and/or at the output and in intermediate positions between the single mixer-demixers, able to focus transiting light beams.

Fig. 4 represents in a Cartesian diagram carrying in abscissa the wavelength $\lambda'$ and in ordinate the refractive indices $n'$, the trends of functions $n'(\lambda')$ relative to the transparent materials forming the optical mixer-demixer of Fig. 3.

The light signal having wavelength $\lambda'_2$ greater than $\lambda'_1$, comprised in the beam $r'_0$, unlike the previous one, meets in correspondence with the separation surface between VO' and V1' a refractive index discontinuity. More particularly, as it may be noted in Fig. 4, at wavelength $\lambda'_2$ the refractive index $n'_1$ is greater than $n'_0$, that is why, by imposing that for the angle comprised between $r'_0$ and the trace of the separation surface VO'—V1' (Fig. 3) the following condition is valid:

$$\alpha'_1 \leqq \text{arc cos} \frac{n'_0(\lambda'_2)}{n'_1(\lambda'_2)}$$

the light signal having length $\lambda'_2$ undergoes a total reflection and goes out of the single mixer-demixer.

All the other light signals having greater wavelength $\lambda'_3$, $\lambda'_4$,..., encounter some differences in the refractive indices between $n'_0$ and $n'_1$, differences which become greater and greater; consequently, even more so, said signals undergo the total reflection.

The light beam $r'_{10}$, comprising all the light signals of $r'_0$ ($r'_1$ excepted) goes into the second single mixer-demixer, wherein the previously examined phenomena are repeated, with the effect of separating from the light beam $r'_{10}$ the optical signal $r'_2$ with wavelength $\lambda'_2$.

Generally, the conditions to be satisfied by the refractive indices of the transparent materials and the mechanical constructive characteristics are as follows:

$$n'_0(\lambda'_i) = n'_i(\lambda'_i) \qquad \text{a)}$$

$$n'_0(\lambda'_{i+1}) < n'_i(\lambda'_{i+1}) \qquad \text{b)}$$

$$n'_{i+1}(\lambda') < n'_i(\lambda') \text{ for } \lambda' > \lambda'_i \qquad \text{c)}$$

$$\alpha'_i \leqq \text{arc cos} \frac{n'_0(\lambda'_{i+1})}{n'_i(\lambda'_{i+1})} \qquad \text{d)}$$

where i may vary from 1 to a number whatever, according to the number of optical signals of different wavelength to be handled.

An example of transparent materials with refractive index having an optical dispersion compatible with conditions a), b) and c) is shown in Fig. 4; as it may be seen, on the basis of the different slopes of the curves, the material $V'_0$ is highly dispersive, whilst the other materials are not.

Of course, according to the principle of the geometrical optics of the reversibility of the light path, all the aforementioned considerations are valid both for an incoming light beam $r'_0$, to be split into the single outgoing optical signals, and for an outgoing light beam, as results from mixing single incoming optical signals.

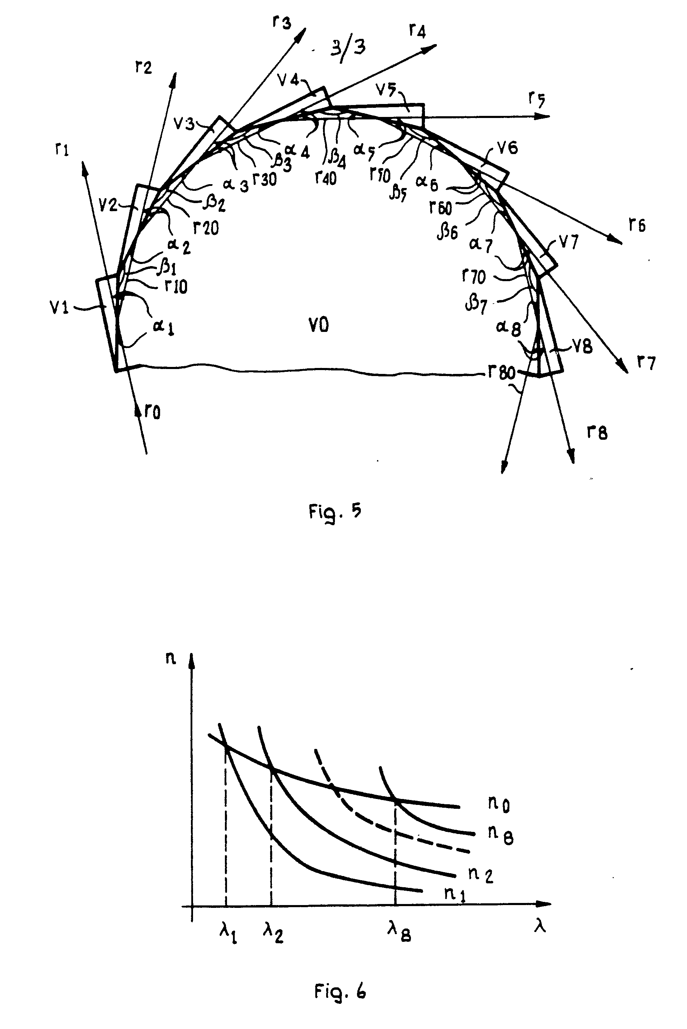

Another example of embodiment of the invention, able to mix and demix nine optical signals going towards or coming from an optical fibre, is shown in cross-sectional view in Fig. 5.

In said Figure, references VO, V1,..., V8 denote nine prismatic bodies of transparent material, whose refractive indices, for a correct operation of the device, must satisfy certain conditions, as will be shown later.

References $r_0$, $r_1$,..., $r_8$ and $r_{10}$, $r_{20}$,..., $r_{80}$ denote the axial rays of optical beams partly reflected and partly transmitted unchanged inside the mixer-demixer; $\alpha_1$, $\alpha_2$,..., $\alpha_8$ are the angles comprised between the axial ray of the light beams and the separation surfaces between the different transparent materials; each $\alpha$ is referred to three angles equal to one another.

References $\beta_1$, $\beta_2$,..., $\beta_7$ denote the angles comprised between two contiguous surfaces separating transparent material VO from transparent materials V1,..., V8, respectively.

Fig. 6 shows in a Cartesian diagram carrying an abscissa the wavelength $\lambda$ and in ordinate the refractive indices, the optical dispersion $n(\lambda)$ relating to the various transparent materials forming the optical mixer-demixer.

References $n_0$, $n_1$,..., $n_8$ denote curves of the refractive index of VO, V1,..., V8 respectively; references $\lambda1$, $\lambda2$,..., $\lambda8$ denote the wavelengths at which intersection occurs between curve $n_0$ and the others.

The procedure of optical mixing-demixing will now be described with reference to the case of the embodiment of Fig. 5 operating on nine optical signals having different wavelengths, collected into one light beam coming from an optical fibre.

The aforementioned beam, denoted by $r_0$ in Fig. 5, is perpendicularly incident on the separation surface air-solid and goes into transparent material VO, having refractive index

$n_0$, till it crosses the separation surface between the transparent materials V0 and V1.

As for the light signal having a wavelength less than $\lambda_1$, the following condition

$$n_1(\lambda_1)=n_0(\lambda_1)$$

is valid, there is no refractive index discontinuity in passing from V0 to V1; consequently no deviation occurs. The signal having wavelength $\lambda_1$, whose axial ray is denoted by $r_1$ passes unchanged through V1 and goes out of the mixer-demixer by traversing perpendicularly the separation surface between V1 and air.

Externally $r_1$ may be picked up by a photodetecting device located in suitable position near the mixer-demixer.

The light beam with wavelength $\lambda_2$ greater than $\lambda_1$, comprised in the beam $r_0$, unlikely the previous one, encounters a refractive index discontinuity in correspondence with the separation surface between V0 and V1.

More particularly, as it may be seen in Fig. 6, at wavelength $\lambda_2$ the refractive index $n_1$ is less than $n_0$, that is why, imposing that the following condition is valid

$$\alpha_1 \leq \text{arc cos} \frac{n_1(\lambda_2)}{n_0(\lambda_2)}$$

for the angle comprised between $r_0$ and the trace of the separation surface V0—V1 (Fig. 5), the light signal with wavelength $\lambda_2$ undergoes a total reflection and is sent towards the separation surface between V0 and V2.

For fabrication requirements of the mixer-demixer, the angle $\beta_1$ comprised between the trace of the separation surface between V0 and V1 and the trace of the separation surface between V0 and V2 must satisfy the condition

$$\beta_1=180°-(\alpha_1+\alpha_2)$$

All the other light signals having greater wavelength $\lambda_3 \ldots \lambda_8$ encounter some differences in the refractive indices between $n_0$ and $n_1$, differences which become greater and greater; consequently, even more so, said signals undergo the total reflection.

The light beam $r_{10}$, comprising all the light signals of $r_0$ ($r_1$ excepted) strikes the separation surface between V0 and V2, wherein the previously examined phenomena are repeated, with the effect that optical signal $r_2$ having wavelength $\lambda_2$ goes out of the mixer-demixer.

Generally, the conditions to be satisfied by the refractive indices of the transparent materials and the mechanical fabrication characteristics are the following:

$$n_0(\lambda_i)=n_i(\lambda_i) \qquad \text{e)}$$

$$n_0(\lambda_{i+1})>n_i(\lambda_{i+1}) \qquad \text{f)}$$

$$n_{i+1}(\lambda)>n_i(\lambda) \text{ for } \lambda>\lambda_i \qquad \text{g)}$$

$$\alpha_i \leq \text{arc cos} \frac{n_i(\lambda_{i+1})}{n_0(\lambda_{i+1})} \qquad \text{h)}$$

$$\beta_i=180°-(\alpha_i+\alpha_{i+1}) \qquad \text{l)}$$

where i may vary from 1 to a number whatever, according to the quantity of optical signals with different wavelengths to be handled.

An example of transparent materials with an optical dispersion compatible with the conditions e), f), g) is represented in Fig. 6; as it may be seen, on the basis of different slopes of the curves, materials V1 ... V8 are highly dispersive, whilst common material V0 is not.

Of course, owing to the principle of geometrical optics of reversibility of the light path, all the considerations above are valid both for an incoming light beam $r_0$, to be split into the single outgoing optical signals, and for an outgoing optical beam, consisting of the mixing of single incoming optical signals.

It is clear that what described has been given only by way of example and not in a limiting sense and that variations and modifications are possible without going out of the scope of the invention.

More particularly, the light beams going in and out of the optical mixer-demixer may be focused by lenses or systems of lenses; to the same purpose the input and output surfaces of the light beams or the separation surfaces between the different materials may assume curved profiles with suitable curvature radius and substances for adapting the refractive index may be placed between the optical mixer-demixer and the light sources or the associated photodetecting devices.

## Claims

1. Method of mixing or demixing light beams having different wavelengths, by using a body subdivided into two parts (V1''—V2''; V0'—V1', V2',... V5'; V0—V1, V2,... V8) made of transparent material having different optical dispersions, by effecting the mixing operation by sending at least two light beams (r1a, r2a) with different wavelengths into the said body so that their axes lie in a plane and the separation plane (AA; AD) of the said two parts bisects the angle between the said two light beams, and by choosing the said angle between the light beams and the difference in the optical dispersions of the said two parts in such a way that for one beam (r1a) no discontinuity of the refractive index appears and it passes the separation plane without deviation whereas the other beam (r2a) meets an index discontinuity which causes total reflection of the said other beam at the separation plane; and by effecting the demixing operation by sending a light beam ($r_0'$; $r_0$) comprising light ($r'_1$, $r'_2$... $r'_5$; $r_1$,

$r_2, \ldots r_8, r_{80}$) with at least two different wavelengths into the said body and by choosing the angle of incidence ($\alpha'_1, \alpha'_2, \ldots \alpha'_5; \alpha_1, \alpha_2, \ldots \alpha_8$) of the said beam and the difference in the optical dispersions of the said two parts of the body in such a way that for the light with one wavelength contained in the incident beam no discontinuity of the refractive index appears and it passes the said separation plane without deviation whereas the remaining light forming the said beam meets an index discontinuity which causes total reflection of that light at the separation plane.

2. The method according to claim 1, characterized in that for mixing more than two light beams, the mixing step is repeated one or several times and in the repeated step(s) the one of the said beams which is subjected to the total reflection consists of the mixing result of the previous step(s), and for demixing a light beam ($r'_0; r_0$) comprising more than two different wavelengths, the demixing step is repeated one or several times and in the step(s) wherein the respective incident beam consists of light with more than two wavelengths, the resulting beam ($r'_1, r'_2, \ldots r'_5; r_1, r_2, \ldots r_8$) for which no discontinuity of the refractive index appears is a beam with only one wavelength while the totally reflected beam ($r'_{10}, r'_{20}, \ldots r'_{40}; r_{10}, r_{20}, \ldots r_{70}$) consist of a light with a mixture of the remaining wavelengths of the incident beam.

3. Optical mixer-demixer for transmission on optical fibres, able to realize the method of claim 1 or 2, characterized in that it comprises a number m of bodies, each acting as a single mixer-demixer for only two light beams, in order to mix or demix a number m+1 of light beams having different wavelengths, each single mixer-demixer consisting of two parts (V0'—V1', V2', ... V5'; V0—V1, V2, ... V8) of transparent material separated by a planar separation surface (AA), one of the parts V0'; V0) of each mixer-demixer having a first refractive index ($n'_0; n_0$) and the other parts (V1', V2', ... V5'; V1, V2, ... V8) having refractive indices ($n'_1, n'_2, \ldots; n_1, n_2, \ldots$) stepping on from one to the next mixer-demixer for the same wavelength so as to have equal refractive index with the first part of each mixer-demixer for the consecutive wavelengths of the light beams.

4. Optical mixer-demixer according to claim 3, characterized in that said first refractive index ($n'_0$) of the first parts of the mixers-demixers decreases more rapidly than the refractive indices stepping on ($n'_1, n'_2, \ldots$) as the wavelength increases.

5. Optical mixer-demixer according to claim 3 or 4, characterized in that said single mixers-demixers are placed so that the light-beam comprising light with different wavelengths, totally reflected on the separation surface of one of said mixers-demixers, strikes on the separation surface of the subsequent mixer-demixer with an angle ($\alpha'_1$) which satisfies the relation

$$\alpha'_i \leqq \text{arc cos} \frac{n'_0(\lambda'_{i+1})}{n'_i(\lambda'_{i+1})} \quad i=0,1,2,\ldots$$

wherein $n'_i(\lambda'_{i+1})$ is the value assumed by the refractive index of the i-th part of transparent material at the (i+1)-th wavelength, and $n'_0(\lambda'_{i+1})$ is the value assumed by the first refractive index at the (i+1)-th wavelength.

6. Optical mixer-demixer according to claim 3, characterized in that its parts having the first refractive index ($n_0$) are united to form one prismatic body (V0) with plane faces, and the other parts having the refractive indices stepping on ($n_1, n_2, \ldots$), form prismatic bodies (V1, V2, ... ), each with at least one plane face, the plane face of said further prismatic bodies being integrally adherent to one of the plane faces of said first prismatic body, the adhesion faces defining the subsequent separation surfaces between said first and further prismatic bodies (Fig. 5).

7. Optical mixer-demixer according to claim 6, characterized in that said first refractive index ($n_0$) is more slowly decreasing than said refractive indices stepping on ($n_1, n_2, \ldots$) are rapidly decreasing as the wavelength increases.

8. Optical mixer-demixer according to the claim 4 or 7, characterized in that each of said refractive indices stepping on ($n'_1, n'_2, \ldots; n_1, n_2, \ldots$) intersects said first refractive index ($n'_0; n_0$) at a different wavelength and does not intersect the other refractive indices in the field of the utilized wavelengths (Fig. 4, 6).

9. Optical mixer-demixer according to claim 6 or 7, characterized in that two contiguous separation surfaces between the first and the further prismatic bodies (V0; V1, V2, ... V8) form an angle $\beta_i$ satisfying the following relation:

$$\beta_i = 180° - (\alpha_i + \alpha_{i+1})$$

where $\alpha_i$ denotes the smallest angle comprised between a generic separation surface, and the central ray of whatever beam incident thereon, and i denotes the order number of said further prismatic bodies.

10. Optical mixer-demixer according to claim 9, characterized in that said smallest angle $\alpha_i$ satisfies the following relation:

$$\alpha_i \leqq \text{arc cos} \frac{n_i(\lambda_{i+1})}{n_0(\lambda_{i+1})} \quad i=1,2,\ldots$$

where $n_i(\lambda_{i+1})$ denotes the value assumed by the refractive index of the i-th prismatic body at the (i+1)-th wavelength, and $n_0(\lambda_{i+1})$ denotes the value assumed by the refractive index of said first body at the (i+1)-th wavelength.

**Revendications**

1. Procédé pour réunir ou séparer des faisceaux lumineux de longueurs d'onde différentes, en employant un premier corps subdivisé un deux parties (V1''—V2''; V0'—V1; V2'...V5'; V0—V1, V2,...V8) de matière transparente ayant dispersions optiques différentes, en effectuant l'opération de réunion par l'envoi au moins de deux faisceaux lumineux (r1a, r2a) avec longueurs d'onde différentes vers ledit corps, de sorte que leurs axes soient situés dans un plan et le plan de séparation (AA; AD) entre les deux parties bissecte l'angle entre les deux faisceaux lumineux, et en choisissant ledit angle entre les faisceaux lumineux et la différence des dispersions optiques desdites deux parties de sorte que l'un des faisceaux (r1a) ne rencontre aucune discontinuité d'indice de réfraction et passe à travers ce plan de séparation sans aucune déviation, tandis que l'autre faisceau (r2a) rencontre une discontinuité d'indice de réfraction qui ait pour effet la réflexion totale de l'autre faisceau près du plan de séparation; et en effectuant l'opération de séparation par l'envoi d'un faisceau lumineux (r$_0$'; r$_0$), qui comprend de la lumière (r$_1$', r$_2$',...r$_5$', r$_1$, r$_2$,...r$_8$, r$_{80}$) avec au moins deux longueurs d'onde différentes vers ledit corps, et en choisissant l'angle d'incidence ($\alpha'_1$, $\alpha'_2$,...$\alpha'_5$; $\alpha_1$, $\alpha_2$,...$\alpha_8$) dudit faisceau et la différence entre les dispersions optiques desdites deux parties du corps de sorte que la lumière avec une longueur d'onde comprise dans le faisceau incident ne rencontre aucune discontinuité de l'indice de réfraction et passe à travers ledit plan de séparation sans déviation, tandis que la restante lumière qui forme ledit faisceau rencontre une discontinuité de l'indice de réfraction qui cause une réflexion totale de ladite lumière près du plan de séparation.

2. Procédé suivant la revendication 1, caractérisé en ce que pour réunir plus de deux faisceaux lumineux, la phase de réunion est répétée une ou plusieurs fois et dans la(les) phase(s) répétée(s) l'un desdits faisceaux qui subit une réflexion totale est constitué par le résultat des réunions de la(des) phase(s) précédente(s), et pour séparer un faisceaux lumineux (r'$_0$; r$_0$) qui comprend plus de deux longueurs d'onde différentes, la phase de séparation est répétée une ou plusieurs fois et dans la(les) phase(s) dans laquelle (lesquelles) le respectif faisceau incident se compose de lumière avec plus de deux longueurs d'onde le faisceau résultant (r'$_1$, r'$_2$,...r'$_5$; r$_1$, r$_2$,...r$_8$), qui ne rencontre aucune discontinuité de l'indice de réfraction, est un faisceau avec une seule longueur d'onde, tandis que le faisceau totalement réfléchi (r'$_{10}$, r'$_{20}$,...r'$_{40}$; r$_{10}$, r$_{20}$,...r$_{70}$) consiste de lumière où les autres longueurs d'onde du faisceau incident sont réunies.

3. Dispostif optique de réunion ou séparation pour la transmission par fibres optiques, capable de réaliser le procédé des revendications 1 ou 2, caractérisé en ce qu'il comprend un nombre m de corps, dont chacun agit comme dispositif individuel de réunion ou séparation de deux faisceaux lumineux, afin de réunir ou séparer un nombre m+1 de faisceaux lumineux ayant longueurs d'onde différentes, chaque dispositif individuel de réunion ou séparation étant constitué par deux parties (v'$_0$—v'$_1$, v'$_2$,...v'$_5$; v$_0$—v$_1$, v$_2$,...v$_8$) de matière transparente séparées par une surface de séparation plane (AA), 1' une des parties (v'$_0$; v$_0$) de chaque dispositif individuel ayant un premier indice de réfraction (n'$_0$; n$_0$) et les autres parties (v'$_1$, v'$_2$,...v'$_5$; v$_1$, v$_2$,...v$_8$) ayant des indices de réfraction (n'$_1$, n'$_2$,...; n$_1$, n$_2$...) qui croissent en passant d'un dispositif individuel au prochain à la même longueur d'onde, de façon que la première partie de chaque dispositif ait le même indice de réfraction aux longueurs d'onde consécutives des faisceaux lumineux.

4. Dispositif optique de réunion ou séparation selon la revendication 3, caractérisé en ce que ledit premier, indice de réfraction (n'$_0$) des premières parties des dispositifs individuels de réunion ou séparation décroît plus rapidement que les indices de réfraction croissants (n'$_1$, n'$_2$) en fonction de l'accroissement de la longueur d'onde.

5. Dispositif optique de réunion ou séparation selon les revendications 3 ou 4, caractérisé en ce que les dispositifs individuels de réunion ou sépation sont placés de telle façon que le faisceau lumineux comprenant de la lumière avec des longueurs d'onde différentes, totalement réfléchi par la surface de séparation de l'un desdits dispositifs individuels, rencontre la surface de séparation du dispositif individuel successif avec un angle $\alpha'_i$ qui satisfait la relation

$$\alpha'_i \leq \arc \cos \frac{n'_0(\lambda'_{i+1})}{n'_i(\lambda'_{i+1})} \quad i=0, 1, 2, \ldots$$

où n'$_i$($\lambda'_{i+1}$) dénote la valeur atteinte par l'indice de réfraction de la partie i-ième de matière transparente à la longueur d'onde (i+1)-ième et n'$_0$($\lambda'_{i+1}$) dénote la valeur atteinte par le premier indice de réfraction à la longueur d'onde (i+1)-ième.

6. Dispositif optique de réunion ou séparation selon la revendication 3, caractérisé in ce que les parties qui ont le premier indice de réfraction (n$_0$) sont jointes pour former un corps prismatique (v$_0$) avec des faces planes, tandis que les autres parties qui ont des indices de réfraction croissants (n$_1$, n$_2$,...) forment des corps prismatiques (v$_1$, v$_2$,...), chacun d'eux ayant au moins une face plane, la face plane desdits corps prismatiques ultérieurs adhérant intégralement à une des faces planes dudit premier corps prismatique, les faces d'adhésion déterminant les surfaces de séparation successives entre lesdits premier et ultérieurs corps prismatiques (Fig. 5).

7. Dispositif optique de réunion ou séparation selon la revendication 6, caractérisé en ce que le premier indice de réfraction (n$_0$) décroît avec l'accroissement des longueurs d'onde plus lentement que lesdits indices de réfraction croissants ($n_1, n_2, \ldots$).

8. Dispositif optique de réunion ou séparation suivant les revendications 4 ou 7, caractérisé en ce que chacun desdits indices de réfraction croissants ($n'_1, n'_2, \ldots; n_1, n_2, \ldots$) croise ledit premier indice de réfraction ($n'_0; n_0$) à une longueur d'onde différente et ne croise pas les autres indices de réfraction dans la bande des longueurs d'onde utilisées (Fig. 4, 6).

9. Dispositif optique de réunion ou séparation selon les revendications 6 ou 7, caractérisé en ce que deux surfaces contiguës de séparation entre le premier et les ultérieurs corps prismatiques ($v_0; v_1, v_2, \ldots v_8$) forment un angle $\beta_i$ qui satisfait la relation suivante:

$$\beta_i = 180° - (\alpha_i + \alpha_{i+1})$$

où $\alpha_i$ dénote l'angle le plus petit formé par n'importe quelle surface de séparation et le rayon central d'un faisceau quelconque qui la recontre et i dénote le numéro d'ordre desdits ultérieurs corps prismatiques.

10. Dispositif optique selon la revendication 9, caractérisé en ce que ledit angle le plus petit $\alpha_i$ satisfait la relation suivante:

$$\alpha_i \leq \arc \cos \frac{n_i(\lambda_{i+1})}{n_0(\lambda_{i+1})} \quad i = 1, 2, \ldots$$

où $n_i(\lambda_{i+1})$ dénote la valeur atteinte par l'indice de réfraction du i-ième corps prismatique à la (i+1)-ième longueur d'onde et $n_0(\lambda_{i+1})$ dénote la valeur atteinte par l'indice de réfraction dudit premier corps à la (i+1)-ième longueur d'onde.

## Patentansprüche

1. Verfahren zum Mischen oder Entmischen von Lichtbündeln mit unterschiedlichen Wellenlängen unter Verwendung eines in zwei Teile (V1''—V2''; V0'—V1', V2',...V5'; V0—V1, V2,...V8) aus transparentem Material mit unterschiedlicher Abhängigkeit des optischen Brechungsindex von der Wellenlänge unterteilten Körpers, wobei man für den Mischvorgang wenigstens zwei Lichtbündel (r1a, r2a) unterschiedlicher Wellenlänge in den Körper so sendet, daß ihre Achsen in einer Ebene liegen und die Trennebene (AA; AD) der beiden Teile den Winkel zwischen den beiden Lichtbündeln halbiert, und man den Winkel zwischen den Lichtbündeln und die Differenz der Abhängigkeiten der optischen Brechungsindizes der beiden Teile so wählt, daß für das eine Bündel (r1a) keine Diskontinuität des Brechungsindex auftritt und es durch die Trennebene ohne Ablenkung hindurchverläuft, während das andere Bündel (r2a) auf eine Index-Diskontinuität trifft, die eine Totalreflexion dieses anderen Bündels an der Trennebene bewirkt; und wobei man für den Entmischvorgang ein Lichtbündel ($r'_0; r_0$), das Licht ($r'_1, r'_2 \ldots r'_5; r_1, r_2 \ldots r_8, r_{80}$) mit we-

nigstens zwei verschiedenen Wellenlängen enthält, in den Körper sendet und den Einfalls-winkel ($\alpha'_1, \alpha'_2, \ldots \alpha'_5; \alpha_1, \alpha_2, \ldots \alpha_8$) dieses Bündels und die Differenz der Abhängigkeiten der optischen Brechungsindizes der beiden Teile des Körpers so wählt, daß für das im einfallenden Bünden enthaltene Licht der einen Wellenlänge keine Diskontinuität des Brechungsindex auftritt und es durch die Trennebene ohne Ablenkung tritt, während das übrige dieses Bündel bildende Licht auf eine Index-Diskontinuität trifft, die an der Trennebene eine Totalreflexion dieses Lichts bewirkt.

2. Verfahren nach Anspruch 1, dadurch gekennzeichnet, daß man zum Mischen von mehr als zwei Lichtbündeln den Mischschritt einmal oder mehrmals wiederholt, wobei bei dem wiederholten Schritt oder den wiederholten Schritten das eine der Bündel, das der Totalreflexion unterworfen ist, aus dem Mischergebnis des vorhergehenden Schritts bzw. der vorhergehenden Schritte besteht, und daß man zum Entmischen eines Lichtbündels ($r'_0, r_0$), das mehr als zwei unterschiedlich Wellenlängen enthält, den Entmischschritt einmal oder mehrere Male wiederholt, wobei bei dem Schritt oder den Schritten, bei denen das jeweilige einfallende Bündel aus Licht mit mehr als zwei Wellenlängen besteht, das resultierende Bündel ($r'_1, r'_2, \ldots r'_5; r_1, r_2, \ldots r_8$), für das keine Diskontinuität des Brechungsindex auftritt, ein Bündel mit nur einer Wellenlänge ist, während das totalreflektierte Bündel ($r'_{10}, r'_{20}, \ldots r'_{40}; r_{10}, r_{20}, \ldots r_{70}$) aus Licht mit einer Mischung aus den verbliebenen Wellenlängen des einfallenden Bündels besteht.

3. Optischer Mischer-Entmischer für die Übertragung auf optischen Fasern, zur Durchführung des Verfahrens nach Anspruch 1 oder 2, dadurch gekennzeichnet, daß er, um eine Anzahl m+1 Lichtbündel mit verschiedenen Wellenlängen zu mischen oder zu entmischen, eine Anzahl m von Körpern enthält, von denen jeder als einzelner Mischer-Entmischer für nur zwei Lichtbündel dient, wobei jeder einzelne Mischer-Entmischer aus zwei Teilen (V0'—V1', V2',...V5'; V0—V1, V2,...V8) aus transparentem Material besteht, die durch eine ebene Trennfläche (AA) voneinander getrennt sind, und einer der Teile (V0'; V0) jedes Mischers-Entmischers einen ersten Brechungs-index ($n'_0; n_0$) aufweist und die anderen Teile (V1', V2',...V5'; V1, V2,...V8) Brechungs-indizes ($n'_1, n'_2, \ldots; n_1, n_2, \ldots$) aufweisen, die von einem zum nächsten Mischer-Entmischer für die selbe Wellenlänge so fortschreiten, daß sie gleichen Brechungsindex wie der erste Teil jedes Mischers-Entmischers für die nachfolgenden Wellenlängen der Lichtbündel haben.

4. Optischer Mischer-Entmischer nach Anspruch 3, dadurch gekennzeichnet, daß sich der erste Brechungsindex ($n'_0$) des ersten Teils der Mischer-Entmischer schneller erniedrigt als die mit zunehmender Wellenlänge fortschreitenden Brechungsindizes ($n'_1, n'_2, \ldots$).

5. Optischer Mischer-Entmischer nach Anspruch 3 oder 4, dadurch gekennzeichnet, daß die enzelnen Mischer-Entmischer so angeordnet sind, daß das Licht verschiedener Wellenlängen umfassende Lichtbündel, das an der Trennfläche eines der Mischer-Entmischer totalreflektiert worden ist, die Trennfläche des nachfolgenden Mischers-Entmischers mit einem Winkel $\alpha'_1$ trifft, der die Beziehung erfüllt

$$\alpha'_i \leqq \text{arc cos} \frac{n'_0(\lambda'_{i+1})}{n'_i(\lambda'_{i+1})} i = 0, 1, 2, \ldots$$

wobei $n'_i(\lambda'_{i+1})$ der vom Brechungsindex des i-ten Teils des transparenten Materials bei der (i+1)-ten Wellenlänge angenommene Wert und $n'_0(\lambda'_{i+1})$ der vom ersten Brechungsindex bei der (i+1)-ten Wellenlänge angenommener Wert ist.

6. Optischer Mischer-Entmischer nach Anspruch 3, dadurch gekennzeichnet, daß seine den ersten Brechungsindex ($n_0$) aufweisenden Teile unter Bildung eines einzigen prismatischen Körpers (V0) mit ebenen Flächen vereinigt sind und die anderen Teile, deren Brechungsindizes ($n_1$, $n_2$, ...) fortschreiten, prismatische Körper (V1, V2, ...) bilden, von denen jeder wenigstens eine ebene Fläche aufweist, wobei die ebene Fläche dieser weiteren prismatischen Körper integral an einer der ebenen Flächen des ersten prismatischen Körpers anhaftet und die Anhaftflächen die aufeinanderfolgenden Trennflächen zwischen dem ersten und den weiteren prismatischen Körpern darstellen (Fig. 5).

7. Optischer Mischer-Entmischer nach Anspruch 6, dadurch gekennzeichnet, daß mit zunehmender Wellenlänge der erste Brechungsindex ($n_0$) langsamer abnimmt, als die fortschreitenden Brechungsindizes ($n_1$, $n_2$, ...) schnell abnehmen.

8. Optischer Mischer-Entmischer nach dem Anspruch 4 oder 7, dadurch gekennzeichnet, daß jeder der fortschreitenden Brechungsindizes ($n'_1$, $n'_2$, ...; $n_1$, $n_2$, ...) den ersten Brechungsindex ($n'_0$; $n_0$) bei einer anderen Wellenlänge schneidet und die anderen Brechungsindizes im Bereich der vorkommenden Wellenlängen nicht schneidet (Fig. 4, 6).

9. Optischer Mischer-Entmischer nach Anspruch 6 oder 7, dadurch gekennzeichnet, daß die beiden aneinander angrenzenden Trennflächen zwischen dem ersten und den weiteren prismatischen Körpern (V0; V1, V2,... V8) einen Winkel $\beta_i$ bilden, der die folgende Beziehung erfüllt

$$\beta_i = 180° - (\alpha_i + \alpha_{i+1})$$

wobei $\alpha_i$ den kleinsten Winkel angibt, der zwischen einer allgemeinen Trennfläche und dem zentralen Strahl eines beliebigen darauf einfallenden Bündels liegt, und i die laufende Nummer der weiteren prismatischen Körper angibt.

10. Optischer Mischer-Entmischer nach Anspruch 9, dadurch gekennzeichnet, daß der kleinste Winkel $\alpha_i$ die folgende Beziehung erfüllt:

$$\alpha_i \leqq \text{arc cos} \frac{n_i(\lambda_{i+1})}{n_0(\lambda_{i+1})} i = 1, 2, \ldots$$

wobei $n_i(\lambda_{i+1})$ den vom Brechungsindex des i-ten prismatischen Körpers bei der (i+1)-ten Wellenlänge angenommenen Wert, und $n_0(\lambda_{i+1})$ den vom ersten Körper bei der (i+1)-ten Wellenlängen angenommenen Wert angibt.

0 003 575

Fig. 1

Fig. 2

Fig. 3

Fig. 4

2

Fig. 5

Fig. 6